# EUROPÄISCHE PATENTANMELDUNG

(11) **EP 3 300 327 A1**
(43) Veröffentlichungstag der Anmeldung: **28.03.2018**
(21) Anmeldenummer: 16190762.1
(22) Anmeldetag: 27.09.2016
(51) Int. Cl.: H04L 29/06

(54) **VERFAHREN UND SYSTEM ZUM SCHUTZ EINES BORDKOMMUNIKATIONSNETZWERKS EINES KRAFTFAHRZEUGS**

(71) Anmelder: Deutsche Telekom AG, 53113 Bonn (DE)
(72) Erfinder: BÜCKER, Andre, 80337 München (DE); MROSS, Carsten, 85107 Baar-Ebenhausen (DE); BERNHOLD, Christian, 85080 Gaimersheim (DE); BITTERLICH, Thomas, 85435 Erding (DE)
(74) Vertreter: Patentship Patentanwaltsgesellschaft mbH

(57) **Zusammenfassung**

Die Erfindung betrifft ein Verfahren und ein System (100) zum Schutz eines Bordkommunikationsnetzwerks eines Kraftfahrzeugs (101 a) einer Gruppe von Kraftfahrzeugen (101a-c). Das Verfahren umfasst die folgenden Schritte: Erfassen einer Abweichung des Verhaltens des Bordkommunikationsnetzwerks von einem definierten Normverhalten des Bordkommunikationsnetzwerks des Kraftfahrzeugs (101 a); falls die erfasste Abweichung keiner Anomalie des Satzes von in dem Kraftfahrzeug (101 a) hinterlegten Anomalien entspricht, Übertragen einer mit der erfassten Abweichung verknüpften Abweichungscharakteristik von dem Kraftfahrzeug (101 a) über ein Kommunikationsnetzwerk (110) an ein Hintergrundsystem (111); Ausbilden eines Satzes von Abweichungscharakteristiken auf der Grundlage der von dem Kraftfahrzeug (101 a) übertragenen Abweichungscharakteristik und der von anderen Kraftfahrzeugen (101 b,c) der Gruppe von Kraftahrzeugen übertragenen Abweichungscharakteristiken; Klassifizieren der erfassten Abweichung als Normverhalten oder als Anomalie auf der Grundlage des Satzes von Abweichungscharakteristiken; und Aktualisieren des definierten Normverhaltens des Bordkommunikationsnetzwerks des Kraftfahrzeugs (101 a) auf der Grundlage der als Normverhalten klassifizierten Abweichung oder des Satzes von in dem Kraftfahrzeug (101 a) hinterlegten Anomalien auf der Grundlage der als Anomalie klassifizierten Abweichung.

## Beschreibung

Die Erfindung betrifft ein Verfahren und ein System zum Schutz eines Bordkommunikationsnetzwerks eines Kraftfahrzeugs.

Mit der zunehmenden Vernetzung insbesondere über Mobilfunknetzwerke können moderne Kraftfahrzeuge auf eine Vielzahl von Online-Diensten zugreifen. Beispielsweise können zukünftige Kraftfahrzeuge mit einem automatischen Notrufsystem (auch als "eCall" bezeichnet) ausgestattet sein. Die Kommunikationsschnittstellen, die ein modernes Kraftfahrzeug für die Kommunikation mit dessen Umgebung benötigt, können im Falle vorhandener Schwachstellen jedoch von einem Angreifer ausgenutzt werden, so dass Funktionen des Kraftfahrzeugs im Sinne des Angreifers manipuliert werden können.

Während Verbindungen über die Luftschnittstelle zu einem Kraftfahrzeug relativ gut abgesichert sind, gibt es hinsichtlich des Datenverkehrs des Bordnetzwerks des Kraftfahrzeugs (z.B. CAN, MOST, LIN, FlexRay, Ethernet, etc.) kaum derartige Sicherheitskonzepte. Zwar wird versucht, auch innerhalb des Kraftfahrzeugs, d.h. im Bordnetzwerk des Kraftfahrzeugs, Verschlüsselungstechnologien einzusetzen. Derartige Sicherheitskonzepte auf der Grundlage von Verschlüsselungstechnologien führen jedoch nur dazu, dass sich das Problem von Cyberangriffen auf eine höhere Komplexitätsstufe verschiebt, wobei das grundsätzliche Problem nach wie vor bestehen bleibt.

Vor diesem Hintergrund ist es die Aufgabe der vorliegenden Erfindung, ein verbessertes Verfahren und ein verbessertes System zum Schutz eines Bordkommunikationsnetzwerks eines Kraftfahrzeugs bereitzustellen.

Diese Aufgabe wird durch die Gegenstände der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum Schutz eines Bordkommunikationsnetzwerks eines Kraftfahrzeugs einer Gruppe von Kraftfahrzeugen. Das Verfahren umfasst die Schritte: Erfassen einer Abweichung des Verhaltens des Bordkommunikationsnetzwerks von einem definierten Normverhalten des Bordkommunikationsnetzwerks des Kraftfahrzeugs; falls die erfasste Abweichung keiner Anomalie des Satzes von in dem Kraftfahrzeug hinterlegten Anomalien entspricht, Übertragen einer mit der erfassten Abweichung verknüpften Abweichungscharakteristik von dem Kraftfahrzeug über ein Kommunikationsnetzwerk an ein Hintergrundsystem; Ausbilden eines Satzes von Abweichungscharakteristiken auf der Grundlage der von dem Kraftfahrzeug übertragenen Abweichungscharakteristik und der von anderen Kraftfahrzeugen der Gruppe von Kraftahrzeugen übertragenen Abweichungscharakteristiken; Klassifizieren der erfassten Abweichung als Normverhalten oder als Anomalie auf der Grundlage des Satzes von Abweichungscharakteristiken; und Aktualisieren des definierten Normverhaltens des Bordkommunikationsnetzwerks des Kraftfahrzeugs auf der Grundlage der als Normverhalten klassifizierten Abweichung oder des Satzes von in dem Kraftfahrzeug hinterlegten Anomalien auf der Grundlage der als Anomalie klassifizierten Abweichung.

Das Verfahren gemäß dem ersten Aspekt der Erfindung erlaubt somit eine fortlaufende Optimierung eines Angriffsdetektionssystems eines Kraftfahrzeugs unter Einbeziehung eines zentralen Hintergrundsystems zur Massendatenauswertung. Diese Optimierung funktioniert umso besser, je größer die Gruppe von Kraftfahrzeugen ist, die das Hintergrundsystem mit Abweichungscharakteristiken zu den entsprechend erfassten Abweichungen beliefern. Die vorliegende Erfindung macht sich sozusagen eine Art Schwarmintelligenz zu Nutze.

Gemäß einer Ausführungsform umfasst der Schritt des Klassifizierens der erfassten Abweichung als Normverhalten oder als Anomalie auf der Grundlage des Satzes von Abweichungscharakteristiken das Verwenden einer statischen Methode, insbesondere einer statistischen Methode zur Big-Data-Analyse, oder auf maschinellem Lernen basiert.

Gemäß einer Ausführungsform umfasst der Schritt des Aktualisierens des definierten Normverhaltens des Bordkommunikationsnetzwerks des Kraftfahrzeugs auf der Grundlage der als Normverhalten klassifizierten Abweichung oder des Satzes von in dem Kraftfahrzeug hinterlegten Anomalien auf der Grundlage der als Anomalie klassifizierten Abweichung einen Schritt des Verknüpfens der als Anomalie klassifizierten Abweichung mit einer Reaktion des Kraftfahrzeugs.

Gemäß einer Ausführungsform umfasst der Schritt des Übertragens der Abweichungscharakteristik an das Hintergrundsystem das Übertragen eines Bordkommunikationsnetzwerk-Traces an das Hintergrundsystem.

Gemäß einer Ausführungsform deckt der Bordkommunikationsnetzwerk-Trace einen Zeitraum ab, der sich von einem ersten Zeitpunkt vor der erfassten Abweichung zu einem zweiten Zeitpunkt nach der erfassten Abweichung erstreckt.

Gemäß einer Ausführungsform umfasst das Verfahren ferner einen Schritt, während einer Anlernphase das Hintergrundsystem durch das Kraftfahrzeug anzulernen, indem während der Anlernphase eine Vielzahl von Bordkommunikationsnetzwerk-Traces an das Hintergrundsystem übertragen werden, die das definierte Normverhalten bestimmen.

Gemäß einer Ausführungsform endet die Anlernphase nach Ablauf einer Erstbetriebsdauer oder nach Erreichen eines Kilometerstands des Kraftfahrzeugs endet.

Gemäß einer Ausführungsform umfasst das Verfahren den weiteren Schritt, falls die erfasste Abweichung einer Anomalie eines Satzes von in dem Kraftfahrzeug hinterlegten Anomalien entspricht, eine Reaktion des Kraftfahrzeugs durchzuführen, die mit der Anomalie verknüpft ist.

Gemäß einer Ausführungsform umfasst der Schritt des Durchführens einer Reaktion des Kraftfahrzeugs das Durchführen einer Gegenmaßnahme gegen einen mit der Anomalie verknüpften Angriff auf das Bordkommunikationsnetzwerk des Kraftfahrzeugs umfasst.

Gemäß einer Ausführungsform umfasst das Bordkommunikationsnetzwerk einen Kommunikationsbus, insbesondere einen CAN-Bus, einen MOST-Bus, einen LIN-BUS, einen FlexRay-Bus oder das Bordkommunikationsnetzwerk umfasst ein Ethernet-Bordkommunikationsnetzwerk.

Gemäß einer Ausführungsform besteht die Gruppe von Kraftfahrzeugen aus Kraftfahrzeugen eines Models, einer Modelreihe oder eines Kraftfahrzeugherstellers.

Gemäß einem zweiten Aspekt betrifft die Erfindung ein Hintergrundsystem zum Schutz eines Bordkommunikationsnetzwerks eines Kraftfahrzeugs einer Gruppe von Kraftfahrzeugen, umfassend: eine Kommunikationsschnittstelle, die ausgebildet ist, über ein Kommunikationsnetzwerk mit dem Kraftfahrzeug zu kommunizieren; und einen Prozessor, der ausgebildet ist: einen Satz von Abweichungscharakteristiken auf der Grundlage einer von dem Kraftfahrzeug übertragenen Abweichungscharakteristik und der von anderen Kraftfahrzeugen der Gruppe von Kraftahrzeugen übertragenen Abweichungscharakteristiken auszubilden, wobei die vom Kraftfahrzeug übertragene Abweichungscharakteristik mit einer vom Kraftfahrzeug erfassten Abweichung des Verhaltens des Bordkommunikationsnetzwerks von einem definierten Normverhalten des Bordkommunikationsnetzwerks des Kraftfahrzeugs verknüpft ist, die keiner Anomalie eines Satzes von in dem Kraftfahrzeug hinterlegten Anomalien entspricht; die erfasste Abweichung als Normverhalten oder als Anomalie auf der Grundlage des Satzes von Abweichungscharakteristiken zu klassifizieren; und das definierte Normverhalten des Bordkommunikationsnetzwerkes des Kraftfahrzeugs auf der Grundlage der als Normverhalten klassifizierten Abweichung zu aktualisieren oder den Satz von in dem Kraftfahrzeug hinterlegten Anomalien auf der Grundlage der als Anomalie klassifizierten Abweichung zu aktualisieren.

Gemäß einer Ausführungsform ist der Prozessor ausgebildet, mittels einer statischen Methode, insbesondere einer statistischen Methode zur Big-Data-Analyse, oder auf der Basis von maschinellem Lernen die erfasste Abweichung als Normverhalten oder als Anomalie auf der Grundlage des Satzes von Abweichungscharakteristiken zu klassifizieren.

Gemäß einer Ausführungsform ist der Prozessor ferner ausgebildet, bei der Aktualisierung des Satzes von in dem Kraftfahrzeug hinterlegten Anomalien die als Anomalie klassifizierte Abweichung mit einer Reaktion des Kraftfahrzeugs zu verknüpfen.

Gemäß einer Ausführungsform umfasst das Hintergrundsystem einen Netzwerk-Server.

Weitere Ausführungsbeispiele werden Bezug nehmend auf die beiliegenden Zeichnungen erläutert. Es zeigen:
- Fig. 1: eine schematische Darstellung eines Systems zum Schutz eines Bordkommunikationsnetzwerks eines Kraftfahrzeugs gemäß einer Ausführungsform;
- Fig. 2: eine schematische Darstellung der Kommunikation zwischen einem Kraftfahrzeug und einem Hintergrundsystem des Systems von Figur 1 gemäß einer Ausführungsform; und

- Fig. 3: eine schematische Darstellung eines Verfahrens zum Schutz eines Bordkommunikationsnetzwerks eines Kraftfahrzeugs gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

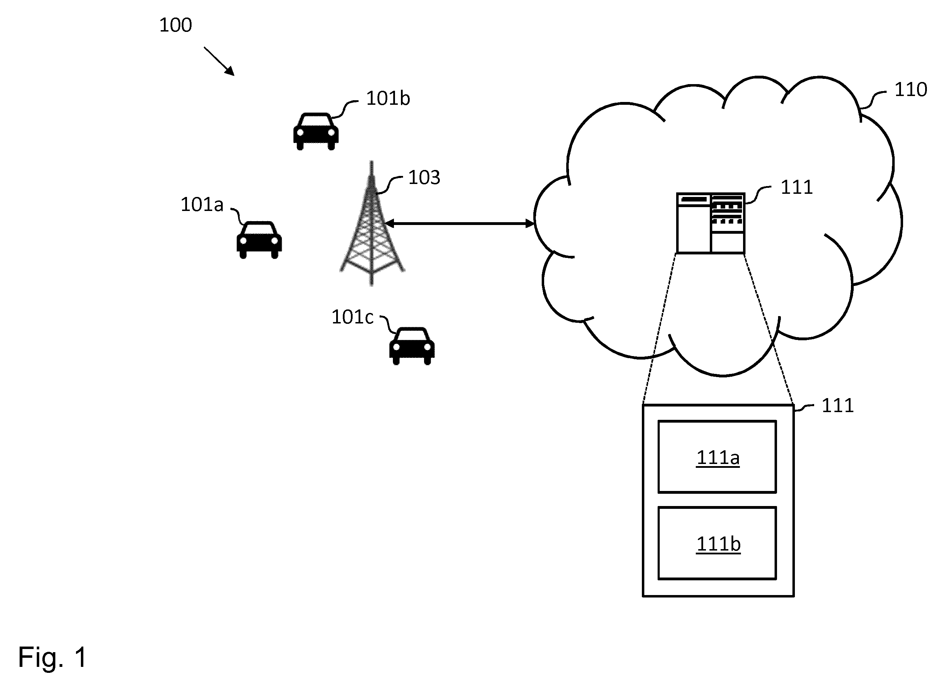

Figur 1 zeigt eine schematische Darstellung eines Systems 100 mit einer Vielzahl bzw. Gruppe von Kraftfahrzeugen 101 a-c und einem Hintergrundsystem 111. Das Kraftfahrzeug 101 a, das nachstehend repräsentativ für die Gruppe von Kraftfahrzeugen 101a-c detaillierter beschrieben wird, umfasst ein Bordkommunikationsnetzwerk, z.B. einen Kommunikationsbus, insbesondere einen CAN-Bus, einen MOST-Bus, einen LIN-BUS, einen FlexRay-Bus oder ein Ethernet-Bordkommunikationsnetzwerk, und ist ausgebildet, zumindest zeitweise über ein Kommunikationsnetzwerk 110 mit dem Hintergrundsystem 111 zu kommunizieren. In einer Ausführungsform kann das Kommunikationsnetzwerk 110 ein Mobilfunknetzwerk 110 sein, das eine mit dem Kraftfahrzeug 101 a kommunizierende Basisstation 103 umfasst. In einer Ausführungsform kann das Hintergrundsystem 111 einen Netzwerk- oder Applikationsserver in dem Kommunikationsnetzwerk 110 umfassen. In einer Ausführungsform besteht die Gruppe von Kraftfahrzeugen 101 a-c aus Kraftfahrzeugen eines Models, einer Modelreihe oder eines Kraftfahrzeugherstellers.

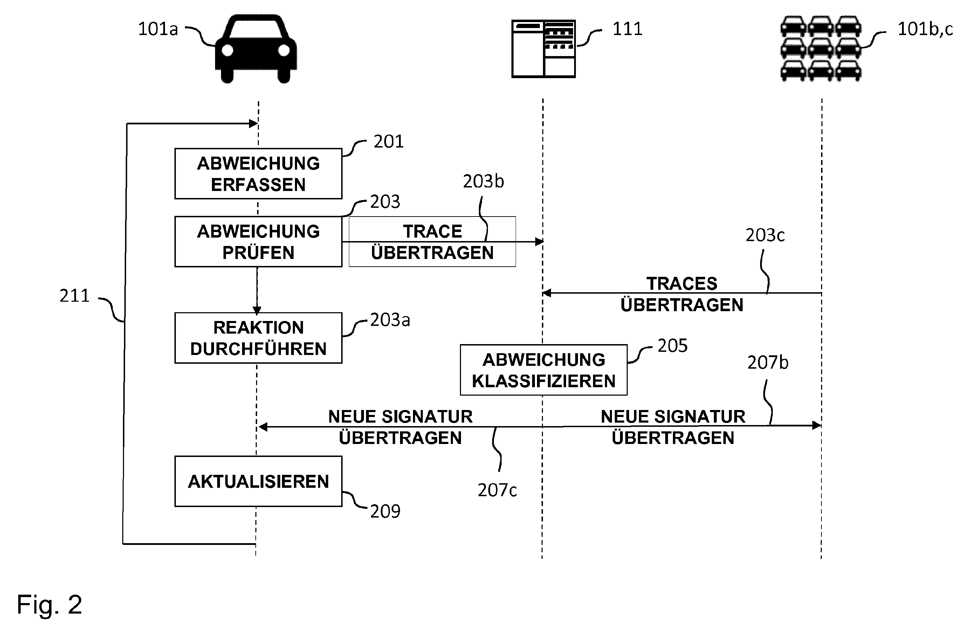

Figur 2 zeigt eine schematische Darstellung der Kommunikation zwischen dem Kraftfahrzeug 101 a und dem Hintergrundsystem 111 des Systems 100 von Figur 1 gemäß einer Ausführungsform. Das Kraftfahrzeug 101 a umfasst eine Kontrolleinheit, die ausgebildet ist, den Datenverkehr des Bordkommunikationsnetzwerks des Kraftfahrzeugs 101 zu überwachen. Bei der Kontrolleinheit kann es sich um ein Software-Modul auf der Basis des AUTOSAR Standards handeln, welches nach dem Anlernen der grundlegenden Netzwerkparameter, diese autonom, d.h. ohne Notwendigkeit einer Online-Verbindung zu dem Hintergrundsystem 111, überwacht. Insbesondere ist die Kontrolleinheit des Kraftfahrzeugs 101a ausgebildet, Abweichungen des Verhaltens des Bordkommunikationsnetzwerks, beispielsweise des Datenverkehrs, von einem definierten Normverhalten des Bordkommunikationsnetzwerks des Kraftfahrzeugs 101a zu erfassen, wie dies in Schritt 201 von Figur 2 dargestellt ist.

Die Kontrolleinheit des Kraftfahrzeugs 101 a ist ferner ausgebildet, bei einer erfassten Abweichung zu überprüfen, ob diese einer im Kraftfahrzeug hinterlegten Anomalie entspricht, wie dies in Schritt 203 von Figur 2 dargestellt ist. Falls dies der Fall ist, d.h. die erfasste Abweichung einer Anomalie eines Satzes von in dem Kraftfahrzeug 101 a hinterlegten Anomalien entspricht, ist die Kontrolleinheit des Kraftfahrzeugs 101a ausgebildet, eine Reaktion des Kraftfahrzeugs 101a zu veranlassen, wie dies in Schritt 203a von Figur 2 dargestellt ist. Falls die erfasste Abweichung beispielweise einem bekannten Angriff entspricht, kann die Kontrolleinheit des Kraftfahrzeugs 101a eine bestimmte Gegenmaßnahme durchführen, z.B. den Datenverkehr in bestimmten Teilen des Bordkommunikationsnetzwerks des Kraftfahrzeugs 101 a zu blockieren.

In einer Ausführungsform ist die Kontrolleinheit des Kraftfahrzeugs 101 a ausgebildet, das Verhalten des Bordkommunikationsnetzwerks des Kraftfahrzeugs 101a anhand von zwei unterschiedlichen Listen abzugleichen. Zunächst wird das Normverhalten anhand einer Liste überprüft, die das definierte Normverhalten bestimmt. Entspricht der aktuelle Netzwerkverkehr nicht dem definierten Normerhalten, so findet im nächsten Schritt die Überprüfung auf Basis der zweiten Liste, dem definierten Anomalieverhalten, statt.

Für den Fall, dass die erfasste Abweichung keiner Anomalie des Satzes von in dem Kraftfahrzeug 101a hinterlegten Anomalien entspricht, überträgt die Kontrolleinheit des Kraftfahrzeugs 101 a eine mit der erfassten Abweichung verknüpften Abweichungscharakteristik über das Kommunikationsnetzwerk 110 an das Hintergrundsystem 111, wie dies in Schritt 203b von Figur 2 dargestellt ist. Bei der mit der erfassten Abweichung verknüpften Abweichungscharakteristik kann es sich insbesondere um eine Trace des Bordkommunikationsnetzwerks handeln. In einer Ausführungsform kann der Bordkommunikationsnetzwerk-Trace einen Zeitraum abdecken, der sich von einem ersten Zeitpunkt vor der erfassten Abweichung zu einem zweiten Zeitpunkt nach der erfassten Abweichung erstreckt, beispielsweise über einen Zeitraum von 1 Minute.

Das Hintergrundsystem 111, bei dem es sich, wie bereits vorstehend erwähnt, um einen Netzwerk- oder Applikationsserver 111 des Kommunikationsnetzwerks 110 handeln kann, umfasst eine Kommunikationsschnittstelle 111 a zur Kommunikation mit der Vielzahl von Kraftfahrzeugen 101a-c sowie einen Prozessor 111 b, wie dies in der Detailansicht von Figur 1 angedeutet ist. Der Prozessor 111 b des Applikationsservers 111 ist dazu ausgebildet, auf der Grundlage des in Schritt 203b vom Kraftfahrzeug 101a erhaltenen Netzwerk-Traces sowie weiterer Netzwerk-Traces der übrigen Kraftfahrzeuge der Gruppe von Kraftfahrzeugen 101 b,c (siehe Schritt 203c von Figur 2) einen Satz von Netzwerk-Traces oder Abweichungscharakteristiken zu sammeln und auf der Grundlage des Satzes von Netzwerk-Traces die von der Kontrolleinheit des Kraftfahrzeugs 101 a erfasste Abweichung als Normverhalten oder als bisher nicht bekannte Anomalie, insbesondere als einen Angriff zu klassifizieren, wie dies in Schritt 205 von Figur 2 dargestellt ist.

In einer Ausführungsform ist der Prozessor 111 b des Applikationsservers 111 dazu ausgebildet, die von der Kontrolleinheit des Kraftfahrzeugs 101a erfasste Abweichung unter Verwendung von statistischen Methoden zur Big-Data-Analyse und/oder von maschinellem Lernen zu klassifizieren. Beispielsweise können dabei die folgenden Verfahren eingesetzt werden: Gaussian Mixture Model, Autoencoder und/oder Decision Tree Analyse.

Zum Anlernen bzw. Trainieren der vom Prozessor 111 b des Applikationsservers 111 verwendeten Methoden zur Klassifizierung der von der Kontrolleinheit des Kraftfahrzeugs 101 a erfassten Abweichung kann gemäß einer Ausführungsform eine Anlernphase eingesetzt werden. Im Rahmen einer solchen Anlernphase kann das Kraftfahrzeug 101a bedingungslos eine Vielzahl von Bordkommunikationsnetzwerk-Traces an den Applikationsserver 111 übertragen, der auf dieser Grundlage das definierte Normverhalten des Bordkommunikationsnetzwerks bestimmt und diese Informationen an das Kraftfahrzeug 101 a überträgt. In einer Ausführungsform kann die Anlernphase nach Ablauf einer Erstbetriebsdauer, beispielsweise einer Erstbetriebsdauer von einigen Minuten, oder nach Erreichen eines Kilometerstands des Kraftfahrzeugs 101 a enden.

Für den Fall, dass der Prozessor 111 b des Applikationsservers 111 die von der Kontrolleinheit des Kraftfahrzeugs 101 a erfasste Abweichung als bisher nicht bekannte Anomalie, insbesondere als einen Angriff klassifiziert, ist der Prozessor 111 b gemäß einer Ausführungsform ferner ausgebildet, die als Anomalie klassifizierte Abweichung mit einer Reaktion oder Gegenmaßnahme des Kraftfahrzeugs 101a zu verknüpfen.

Nachdem der Prozessor 111 b des Applikationsservers 111 die von der Kontrolleinheit des Kraftfahrzeugs 101a erfasste Abweichung in Schritt 205 von Figur 2, wie vorstehend beschrieben, klassifiziert hat, übertragt der Applikationsserver 111 über dessen Kommunikationsschnittstelle 111a ein aktualisiertes definiertes Normverhalten und/oder einen aktualisierten Satz von Anomalien, was in Figur 2 als neue Signatur bezeichnet wird, an das Kraftfahrzeug 101 a sowie die anderen Kraftfahrzeuge 101 b,c der Gruppe von Kraftfahrzeugen (siehe Schritte 207c und 207b von Figur 2). Hierdurch kann in Schritt 209 von Figur 2 das Kraftfahrzeug 101 a das definierte Normverhalten und/oder den hinterlegten Satz von Anomalien des Bordkommunikationsnetzwerks aktualisieren. Wie vorstehend bereits beschrieben, kann die in den Schritten 207c und 207d übertragene neue Signatur die Gegenmaßnahmen definieren, die vom Prozessor 111 b des Applikationsservers 111 mit den bisher nicht bekannten Anomalien verknüpft worden sind.

Nach der Aktualisierung des definierten Normverhalten und/oder des hinterlegten Satzes von Anomalien des Bordkommunikationsnetzwerks in Schritt 209 von Figur 2, ist die Kontrolleinheit des Kraftfahrzeugs 101a ausgebildet, neue Abweichungen des Verhaltens des Bordkommunikationsnetzwerks vom aktualisierten definierten Normverhalten zu erfassen (siehe Schritt 211 von Figur 2).

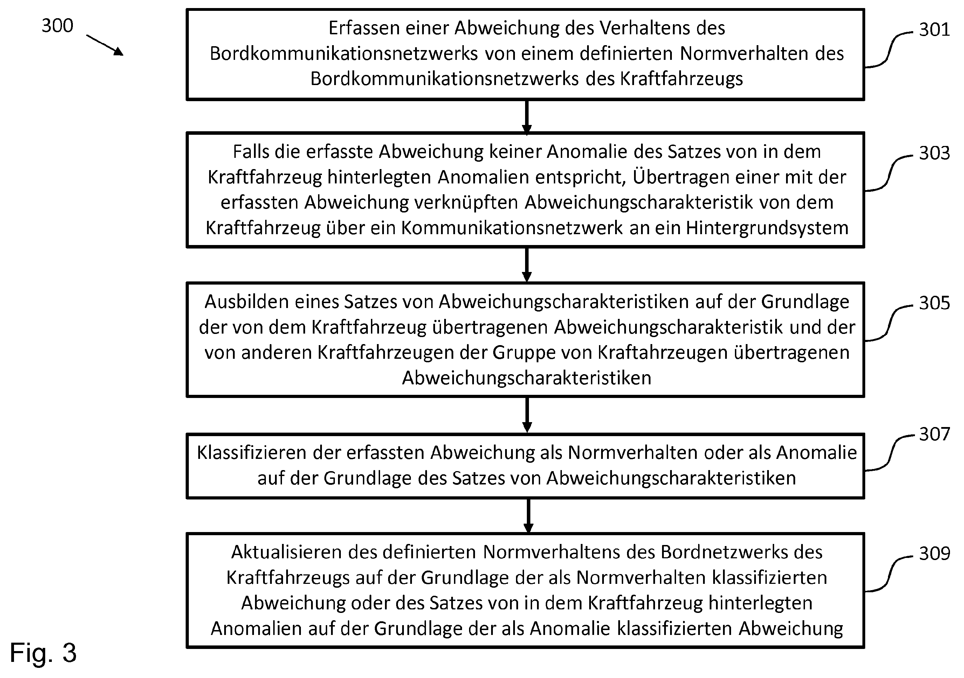

Figur 3 zeigt eine schematische Darstellung eines entsprechenden Verfahrens 300 zum Schutz des Bordkommunikationsnetzwerks des Kraftfahrzeugs 101 a gemäß einer Ausführungsform.

Das Verfahren 300 umfasst die folgenden Schritte: das Erfassen 301 einer Abweichung des Verhaltens des Bordkommunikationsnetzwerks von einem definierten Normverhalten des Bordkommunikationsnetzwerks des Kraftfahrzeugs 101a; falls die erfasste Abweichung keiner Anomalie des Satzes von in dem Kraftfahrzeug 101a hinterlegten Anomalien entspricht, Übertragen 303 einer mit der erfassten Abweichung verknüpften Abweichungscharakteristik von dem Kraftfahrzeug 101 a über das Kommunikationsnetzwerk 110 an das Hintergrundsystem 111; das Ausbilden 305 eines Satzes von Abweichungscharakteristiken auf der Grundlage der von dem Kraftfahrzeug 101 a übertragenen Abweichungscharakteristik und der von anderen Kraftfahrzeugen 101 b,c der Gruppe von Kraftahrzeugen übertragenen Abweichungscharakteristiken; das Klassifizieren 307 der erfassten Abweichung als Normverhalten oder als Anomalie auf der Grundlage des Satzes von Abweichungscharakteristiken; und das Aktualisieren 309 des definierten Normverhaltens des Bordkommunikationsnetzwerks des Kraftfahrzeugs 101a auf der Grundlage der als Normverhalten klassifizierten Abweichung oder des Satzes von in dem Kraftfahrzeug 101a hinterlegten Anomalien auf der Grundlage der als Anomalie klassifizierten Abweichung.

## Patentansprüche

1. Verfahren (300) zum Schutz eines Bordkommunikationsnetzwerks eines Kraftfahrzeugs (101a) einer Gruppe von Kraftfahrzeugen (101a-c), umfassend:
Erfassen (301) einer Abweichung des Verhaltens des Bordkommunikationsnetzwerks von einem definierten Normverhalten des Bordkommunikationsnetzwerks des Kraftfahrzeugs (101a);
falls die erfasste Abweichung keiner Anomalie des Satzes von in dem Kraftfahrzeug (101 a) hinterlegten Anomalien entspricht, Übertragen (303) einer mit der erfassten Abweichung verknüpften Abweichungscharakteristik von dem Kraftfahrzeug (101a) über ein Kommunikationsnetzwerk (110) an ein Hintergrundsystem (111);
Ausbilden (305) eines Satzes von Abweichungscharakteristiken auf der Grundlage der von dem Kraftfahrzeug (101 a) übertragenen Abweichungscharakteristik und der von anderen Kraftfahrzeugen (101 b,c) der Gruppe von Kraftahrzeugen übertragenen Abweichungscharakteristiken;
Klassifizieren (307) der erfassten Abweichung als Normverhalten oder als Anomalie auf der Grundlage des Satzes von Abweichungscharakteristiken; und
Aktualisieren (309) des definierten Normverhaltens des Bordkommunikationsnetzwerks des Kraftfahrzeugs (101 a) auf der Grundlage der als Normverhalten klassifizierten Abweichung oder des Satzes von in dem Kraftfahrzeug (101a) hinterlegten Anomalien auf der Grundlage der als Anomalie klassifizierten Abweichung.

2. Verfahren (300) nach Anspruch 1, wobei der Schritt des Klassifizierens (307) der erfassten Abweichung als Normverhalten oder als Anomalie auf der Grundlage des Satzes von Abweichungscharakteristiken das Verwenden einer statischen Methode umfasst, insbesondere einer statistischen Methode zur Big-Data-Analyse, oder auf maschinellem Lernen basiert.

3. Verfahren (300) nach Anspruch 2, wobei der Schritt des Aktualisierens (309) des definierten Normverhaltens des Bordkommunikationsnetzwerks des Kraftfahrzeugs (101a) auf der Grundlage der als Normverhalten klassifizierten Abweichung oder des Satzes von in dem Kraftfahrzeug (101 a) hinterlegten Anomalien auf der Grundlage der als Anomalie klassifizierten Abweichung einen Schritt des Verknüpfens der als Anomalie klassifizierten Abweichung mit einer Reaktion des Kraftfahrzeugs (101 a) umfasst.

4. Verfahren (300) nach einem der vorstehenden Ansprüche, wobei der Schritt des Übertragens (303) der Abweichungscharakteristik an das Hintergrundsystem (111) das Übertragen eines Bordkommunikationsnetzwerk-Traces an das Hintergrundsystem (111) umfasst.

5. Verfahren (300) nach Anspruch 4, wobei der Bordkommunikationsnetzwerk-Trace einen Zeitraum abdeckt, der sich von einem ersten Zeitpunkt vor der erfassten Abweichung zu einem zweiten Zeitpunkt nach der erfassten Abweichung erstreckt.

6. Verfahren (300) nach Anspruch 4 oder 5, wobei das Verfahren (300) ferner einen Schritt umfasst, während einer Anlernphase das Hintergrundsystem (111) durch das Kraftfahrzeug (101 a) anzulernen, indem während der Anlernphase eine Vielzahl von Bordkommunikationsnetzwerk-Traces an das Hintergrundsystem (111) übertragen werden, die das definierte Normverhalten bestimmen.

7. Verfahren (300) nach Anspruch 6, wobei die Anlernphase nach Ablauf einer Erstbetriebsdauer oder nach Erreichen eines Kilometerstands des Kraftfahrzeugs (101 a) endet.

8. Verfahren (300) nach einem der vorstehenden Ansprüche, wobei das Verfahren (300) den weiteren Schritt umfasst, falls die erfasste Abweichung einer Anomalie eines Satzes von in dem Kraftfahrzeug (101 a) hinterlegten Anomalien entspricht, eine Reaktion des Kraftfahrzeugs (101 a) durchzuführen, die mit der Anomalie verknüpft ist.

9. Verfahren (300) nach Anspruch 8, wobei der Schritt des Durchführens einer Reaktion des Kraftfahrzeugs (101 a) das Durchführen einer Gegenmaßnahme gegen einen mit der Anomalie verknüpften Angriff auf das Bordkommunikationsnetzwerk des Kraftfahrzeugs (101a) umfasst.

10. Verfahren (300) nach einem der vorstehenden Ansprüche, wobei das Bordkommunikationsnetzwerk einen Kommunikationsbus, insbesondere einen CAN-Bus, einen MOST-Bus, einen LIN-BUS, einen FlexRay-Bus umfasst, oder das Bordkommunikationsnetzwerk ein Ethernet-Bordkommunikationsnetzwerk umfasst.

11. Verfahren (300) nach einem der vorstehenden Ansprüche, wobei die Gruppe von Kraftfahrzeugen (101a-c) aus Kraftfahrzeugen eines Models, einer Modelreihe oder eines Kraftfahrzeugherstellers besteht.

12. Hintergrundsystem (111) zum Schutz eines Bordkommunikationsnetzwerks eines Kraftfahrzeugs (101a) einer Gruppe von Kraftfahrzeugen (101a-c), umfassend:
eine Kommunikationsschnittstelle (111a), die ausgebildet ist, über ein Kommunikationsnetzwerk (110) mit dem Kraftfahrzeug (101a) zu kommunizieren; und
einen Prozessor (111 b), der ausgebildet ist:
einen Satz von Abweichungscharakteristiken auf der Grundlage einer von dem Kraftfahrzeug (101a) übertragenen Abweichungscharakteristik und der von anderen Kraftfahrzeugen (101 b,c) der Gruppe von Kraftahrzeugen übertragenen Abweichungscharakteristiken auszubilden, wobei die vom Kraftfahrzeug (101a) übertragene Abweichungscharakteristik mit einer vom Kraftfahrzeug (101 a) erfassten Abweichung des Verhaltens des Bordkommunikationsnetzwerks von einem definierten Normverhalten des Bordkommunikationsnetzwerks des Kraftfahrzeugs (101a) verknüpft ist, die keiner Anomalie eines Satzes von in dem Kraftfahrzeug (101a) hinterlegten Anomalien entspricht;
die erfasste Abweichung als Normverhalten oder als Anomalie auf der Grundlage des Satzes von Abweichungscharakteristiken zu klassifizieren; und
das definierte Normverhalten des Bordkommunikationsnetzwerkes des Kraftfahrzeugs (101 a) auf der Grundlage der als Normverhalten klassifizierten Abweichung zu aktualisieren oder den Satz von in dem Kraftfahrzeug (101a) hinterlegten Anomalien auf der Grundlage der als Anomalie klassifizierten Abweichung zu aktualisieren.

13. Hintergrundsystem (111) nach Anspruch 12, wobei der Prozessor (111 b) ausgebildet ist, mittels einer statischen Methode, insbesondere einer statistischen Methode zur Big-Data-Analyse, oder auf der Basis von maschinellem Lernen die erfasste Abweichung als Normverhalten oder als Anomalie auf der Grundlage des Satzes von Abweichungscharakteristiken zu klassifizieren.

14. Hintergrundsystem (111) nach Anspruch 12 oder 13, wobei der Prozessor (111 b) ferner ausgebildet ist, bei der Aktualisierung des Satzes von in dem Kraftfahrzeug (101 a) hinterlegten Anomalien die als Anomalie klassifizierte Abweichung mit einer Reaktion des Kraftfahrzeugs (101a) zu verknüpfen.

15. Hintergrundsystem (111) nach einem der Ansprüche 12 bis 14, wobei das Hintergrundsystem (111) einen Netzwerk-Server umfasst.
